# EUROPÄISCHE PATENTSCHRIFT

(11) **EP 2 311 029 B1**
(45) Veröffentlichungstag und Bekanntmachung des Hinweises auf die Patenterteilung: **03.10.2018**
(21) Anmeldenummer: 09777841.9
(22) Anmeldetag: 12.08.2009
(51) Int. Cl.: G10K 11/178, B01D 61/10, B01D 61/02

(54) **UMKEHROSMOSEANLAGE MIT EINER VORRICHTUNG ZUR GERÄUSCHMINDERUNG SOWIE VERFAHREN ZUR GERÄUSCHMINDERUNG EINER UMKEHROSMOSEANLAGE**
REVERSE-OSMOSIS SYSTEM WITH AN APPARATUS FOR REDUCING NOISE AND METHOD FOR REDUCING NOISE IN A REVERSE-OSMOSIS SYSTEM
DISPOSITIF D'OSMOSE INVERSE COMPORTANT UN APPAREIL D'INSONORISATION ET PROCÉDÉ D'INSONORISATION D'UN DISPOSITIF D'OSMOSE INVERSE

(30) Priorität: 12.08.2008 DE 102008038751
(43) Veröffentlichungstag der Anmeldung: 20.04.2011
(73) Patentinhaber: Fresenius Medical Care Deutschland GmbH, 61352 Bad Homburg (DE)
(72) Erfinder: KLÖFFEL, Peter, 97720 Nüdlingen (DE); NICHOLAS, Olaf, 97318 Kitzingen (DE); SPICKERMANN, Reiner, 97535 Burghausen (DE)
(74) Vertreter: Laufhütte, Dieter
(86) Internationale Anmeldenummer: PCT/EP2009/005857
(87) Internationale Veröffentlichungsnummer: WO 2010/017976

(56) Entgegenhaltungen:
- DE-U1-202006 017 541
- US-A- 4 498 982
- US-A- 5 548 653
- US-A1- 2007 104 334
- US-A1- 2008 110 459

## Beschreibung

Die vorliegende Erfindung betrifft eine Umkehrosmoseanlage mit einer Vorrichtung zur Geräuschminderung der Umkehrosmoseanlage.

Eine Umkehrosmose-Wasseraufbereitungseinheit (RO-Einheit), im folgenden kurz Umkehrosmoseanlage, einer Dialysemaschine mit integrierter Wasseraufbereitung stellt eine erhebliche Schallquelle dar. Aus dem Stand der Technik ist es bereits bekannt, eine Minderung der Geräuschemissionen vorzunehmen. So offenbart es beispielsweise die US 4,498,982, eine Minderung der Schallemissionen einer Umkehrosmoseanlage durch eine unbelüftete Kapselung zu erreichen. Mit der in der US 4,498,982 vorgeschlagenen Maßnahme lässt sich zwar eine gewisse Geräuschreduzierung erreichen, jedoch besteht nach wie vor der Wunsch danach, die Schallemissionen weiter zu verringern. Dies gilt beispielsweise für Dialysezentren bzw. in Kliniken aber auch im Bereich der Heimdialyse, das heißt bei im privaten Bereich zum Einsatz kommenden Dialysemaschinen. Auch diese sollen möglichst leise betrieben werden können, um die Geräuschbelastungen der Patienten zu verringern und den Behandlungs-Komfort zu verbessern. Die DE 20 2006 017 541 beschreibt eine Umkehrosmoseanlage, die durch einen mit schalldämmendem Schaumstoffmaterial ausgekleideten Koffer umschlossen wird. Dies dient der Verminderung von Geräuschemissionen. Die vorliegende Erfindung umfasst nicht nur Dialysemaschinen mit integrierter Wasseraufbereitung, sondern sowohl interne als auch externe RO-Anlagen für die Wasseraufbereitung in Verbindung mit der Dialyse.

Diese Aufgabe wird durch eine Umkehrosmoseanlage mit den Merkmalen des Anspruchs 1 gelöst.

Danach ist vorgesehen, dass die Vorrichtung zur Geräuschminderung wenigstens einen Sensor zur Erfassung wenigstens eines von der Umkehrosmoseanlage abgegebenen Geräusches, wenigstens einen mit dem Sensor in Verbindung stehenden Controller zur Auswertung des oder der von dem Sensor erhaltenen Signale sowie wenigstens einen mit dem Controller in Verbindung stehenden Aktuator aufweist, wobei der Aktuator derart ausgebildet ist, dass er ein derartiges akustisches Signal oder eine derartige Vibration erzeugt, dass das von der Umkehrosmoseanlage erzeugte Geräusch gedämpft oder ausgelöscht wird.

Die vorliegende Erfindung basiert somit auf dem Gedanken des "Active Noise Cancelling" (ANC), das heißt der aktiven Geräuschminderung. Eine derartige aktive Geräuschminderung ist beispielsweise zum Einsatz an Computern (US 5,636,286) und auch im Bereich der Medizintechnik bekannt. Exemplarisch wird auf die US 5,427,102 sowie auf die US 5,13,945 verwiesen, die sich auf die aktive Geräuschminderung eines MRI-Gerätes beziehen, oder auf die US 4,672,977, die die Eliminierung der Geräusche der Lunge zum Zwecke der Erfassung von Herzsignalen zum Gegenstand hat.

Auf dem Gebiet der Geräuschminderung bei Umkehrosmoseanlagen im allgemeinen und insbesondere im Bereich der Dialyse ist der Einsatz dieser Technik jedoch neu. Der Wunsch nach dem Einsatz der Hämodialyse insbesondere zur Heimdialyse macht eine optimale Geräuschminderung am Ort der Entstehung besonders wünschenswert, wodurch der mit der ANC verbundene höhere apparative Aufwand gerechtfertigt ist.

Die erfindungsgemäße Geräuschminderung umfasst nicht nur die klassische ANC, bei der der Aktuator eine akustische Quelle (Lautsprecher) darstellt, die ein gegenläufiges akustisches Signal erzeugt, das die von einem oder mehreren Bauteilen der Umkehrosmoseanlage ausgehende akustische Störung vermindert oder auslöscht. Von der vorliegenden Erfindung ist auch die sogenannte "Active Structural - Accoustic Control" (ASAC) umfasst. Hierunter fallen konstruktive Maßnahmen, die durch mechanische Schwingungen aktiv Vibrationen und Geräusche mindern. Zum Einsatz kommen hier als Aktuatoren Vibrationsquellen, wie z. B. sogenannte Shaker oder auch Piezokeramik, die dem Schwingungsverhalten einer Anordnung entgegenwirken und auf diese Weise die Geräuschemissionen verringern oder gänzlich eliminieren.

Die Aufgabe des Aktuators zur Erzeugung des Gegenschalls bzw. entgegengerichteter Schwingungen besteht darin, die Schallerzeugung möglichst an der bzw. den Schallquellen selbst bzw. an angekoppelten Bauteilen zu lindern bzw. möglichst auszulöschen.

In einer bevorzugten Ausgestaltung der Erfindung ist vorgesehen, dass die Umkehrosmoseanlage eine Gehäusewandung aufweist und dass der wenigstens eine Aktuator an der Außenseite und/oder an der Innenseite der Gehäusewandung angeordnet ist. Die Aktuatoren, wie beispielsweise Shaker, zur Erzeugung des Gegenschalls bzw. gegenläufiger Schwingungen können somit an einer oder mehreren Stellen der Gehäusewandung der Umkehrosmoseanlage angebracht werden und zwar innerhalb des Gehäuses und/oder auch außerhalb des Gehäuses. Der oder die Aktuatoren können z. B. mittig und/oder auch im Randbereich der Gehäusewandung angeordnet sein.

Denkbar ist es, wenn der oder die Aktuatoren unmittelbar an der Gehäusewandung anliegen.

Grundsätzlich kann die erfindungsgemäße Technik zur Geräuschminderung auch die Schallemissionen anderer Geräuschquellen einer Dialysemaschine mindern. Derartige mögliche andere Schallquellen sind z. B. die Pumpen einer Dialysemaschine.

In weiterer Ausgestaltung der Erfindung ist vorgesehen, dass die Umkehrosmoseanlage eine Tragstruktur aufweist und dass der wenigstens eine Aktuator unmittelbar oder mittelbar an der Tragstruktur angeordnet ist.

Weiterhin kann vorgesehen sein, dass der wenigstens eine Aktuator unmittelbar an, oder in einem der Bauteile der Umkehrosmoseanlage angeordnet ist oder mittels eines Tragelementes an oder in der Umkehrosmoseanlage angeordnet ist. Denkbar ist es beispielsweise, dass es sich bei dem Bauteil um die Pumpe der Umkehrosmoseanlage handelt. Hierbei wäre denkbar, dass der wenigstens eine Aktuator unmittelbar an der Pumpe, beispielsweise an dem Pumpenkopf der Pumpe oder an dem Pumpenmotor angeordnet ist.

Denkbar ist es ebenso, den Aktuator an einem Haltewinkel oder einer sonstigen Tragstruktur anzuordnen, wobei die Positionierung vorzugsweise derart erfolgt, dass eine möglichst weitgehende Geräuschminderung oder -eliminierung erfolgt.

Denkbar ist es beispielsweise, den Aktuator, der wie oben ausgeführt beispielsweise als Shaker ausgeführt sein kann, an einem Tragwinkel längs zum Pumpenmotor oder auch quer zum Pumpenmotor anzuordnen.

Wie oben ausgeführt, kann alternativ oder zusätzlich vorgesehen sein, den oder die Aktuatoren an der Gehäusewandung der Umkehrosmoseanlage anzubringen.

Die vorliegende Erfindung betrifft des weiteren eine Dialysemaschine, die mit einer Umkehrosmoseanlage gemäß einem der Ansprüche 1 bis 8 in Verbindung steht oder eine solche Umkehrosmoseanlage aufweist.

Denkbar ist es, dass es sich um eine Dialysemaschine mit integrierter Wasseraufbereitungseinheit in Form einer Umkehrosmoseanlage handelt. Wie oben ausgeführt, ist ein denkbarer Einsatz derartiger Dialysemaschinen der Bereich der Heimdialyse. Darauf ist die Erfindung jedoch nicht beschränkt, sondern umfasst ebenso Dialysemaschinen, die üblicherweise in Dialysezentren bzw. in Kliniken zum Einsatz kommen, denn auch dort besteht der Bedarf, Dialysemaschinen möglichst leise betreiben zu können, um die Geräuschbelastung der Patienten zu verringern und den Behandlungs-Komfort zu verbessern.

In weiterer Ausgestaltung der Erfindung ist vorgesehen, dass der Controller der Vorrichtung zur Geräuschminderung Bestandteil einer Rechen- oder Steuereinheit der Dialysemaschine ist oder mit der Rechen- oder Steuereinheit der Dialysemaschine in Verbindung steht. Moderne Dialysemaschinen verfügen meist über mehrere Mikroprozessoren mit einer beträchtlichen Rechenleistung, die bei künftigen Generationen von Dialysemaschinen weiter ausgebaut werden wird. Hier ergibt sich ein zusätzlicher Synergieeffekt für den Einsatz der Vorrichtung zur Geräuschminderung, da die Vorrichtung Rechenleistung benötigt. Diese Rechenleistung wird benötigt, um das mittels des oder der Sensoren aufgezeichnete Signal zu verarbeiten und darauf basierend Signale an den oder die Aktuatoren derart abzugeben, dass diese einen Gegenschall bzw. Vibrationen erzeugen, die der Geräuschminderung oder -eliminierung dienen.

Ein Aspekt der vorliegenden Erfindung besteht somit darin, dass der Controller entweder Bestandteil der Rechen- oder Steuereinheit der Dialysemaschine ist oder mit dieser in Verbindung steht, beispielsweise derart, dass bestimmte Rechenleistungen von der Rechen- oder Steuereinheit der Dialysemaschine übernommen werden.

Die vorliegende Erfindung betrifft des weiteren ein Verfahren zur Geräuschminderung einer Umkehrosmoseanlage mit den Merkmalen des Anspruchs 11. Danach ist vorgesehen, dass wenigstens ein von der Umkehrosmoseanlage abgegebenes Geräusch erfaßt wird, dass das erfaßte Geräusch ausgewertet wird und dass in Abhängigkeit der erfolgten Auswertung ein akustisches Signal oder eine Vibration erzeugt wird, mittels dessen/derer das seitens der Umkehrosmoseanlage erzeugte Geräusch gedämpft oder ausgelöscht wird.

Wie oben bereits ausgeführt, kann vorgesehen sein, dass an mehreren Positionen der Umkehrosmoseanlage Geräusche erfaßt werden und/oder dass an mehreren Positionen der Umkehrosmoseanlage akustische Signale und/oder Vibrationen erzeugt werden, mittels derer das erfaßte Geräusch gedämpft oder ausgelöscht wird. Wie ebenfalls ausgeführt, kann die Auswertung des erfaßten Geräusches durch eine Rechen- oder Steuereinheit der Dialysemaschine vorgenommen oder zumindest unterstützt werden.

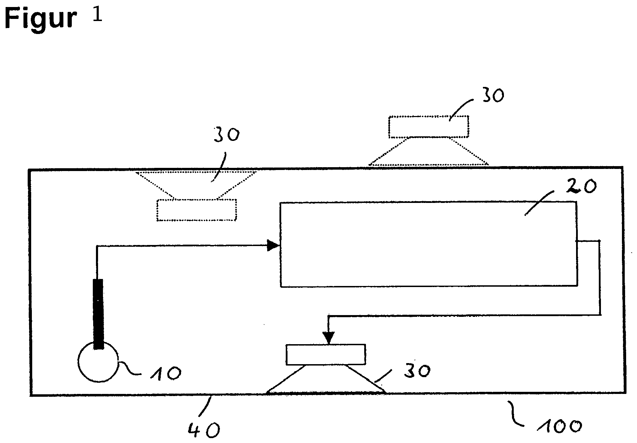

Weitere Einzelheiten und Vorteile der Erfindung werden anhand eines in der Zeichnung dargestellten Ausführungsbeispiels erläutert. Die einzige Figur zeigt in schematischer Ansicht eine Umkehrosmoseanlage gemäß der vorliegenden Erfindung.

Die Umkehrosmoseanlage 100 gemäß der Figur weist einen Sensor 10 auf, der als Mikrophon ausgeführt ist und der an einer geeigneten Stelle die Geräusche der Umkehrosmoseanlage aufnimmt. Denkbar ist es beispielsweise, das Mikrophon an oder im Bereich der Ansaugschlauches der Pumpe der Umkehrosmoseanlage anzuordnen. Das oder die das bzw. die Geräusche repräsentierende Signale werden an einen Controller 20 weitergeleitet. Dieser verarbeitet die aufgenommenen Signale gegebenenfalls durch Unterstützung durch die Rechen- und Steuereinheit einer Dialysemaschine und ermittelt Ausgangssignale, die sodann an wenigstens einen Aktuator 30 übermittelt werden. Dabei werden die Ausgangssignale so bestimmt, dass die von dem Aktuator 30 erzeugten akustischen Signale oder Vibrationen möglichst weitgehend den Geräuschen entgegenwirken, die durch den Sensor 10 aufgenommen wurden.

In dem hier dargestellten Beispiel ist der Controller 20 Bestandteil der Umkehrosmoseanlage 100. Grundsätzlich ist es ebenso denkbar, den Controller in der Dialysemaschine anzuordnen, so dass die Auswertung dort erfolgt und die Signale sodann von dort an den oder die Aktuatoren 30 übermittelt werden.

Der Aktuator 30 kann als akustische Quelle, das heißt als Lautsprecher ausgeführt sein, der ein zu dem aufgenommenen Geräusch gegenläufiges Geräusch bzw. Schall erzeugt, das die Störung auslöscht oder mindert.

Alternativ oder zusätzlich kann vorgesehen sein, dass der Aktuator Vibrationen erzeugt, die dem Schwingungsverhalten der fraglichen Anordnung, wie beispielsweise der gesamten Umkehrosmoseanlage oder einer Komponente davon, wie beispielsweise der Pumpe oder dem Pumpenmotor, entgegenwirken. Die Vibrationsquelle kann beispielsweise als sogenannter Shaker oder als Piezokeramik ausgeführt sein. Denkbar sind auch andere Vibrationsquellen, die in geeigneter Weise eine entgegengerichtete Schwingung erzeugen.

In dem in der Figur dargestellten Ausführungsbeispiel befindet sich der Aktuator 30 auf der Innenseite der Gehäusewandung 40 der Umkehrosmoseanlage 100.

Alternativ oder zusätzlich dazu können ein oder mehrere Aktuatoren 30 auf der Außenseite der Gehäusewandung 40 oder auch an anderer Stelle der Gehäuseinnenwandung angeordnet werden. Diese weiteren oder alternativen Positionen von Aktuatoren sind in der Figur durch punktierte Linien angedeutet.

Denkbar ist es, das Signal des Sensors 10 bzw. des Mikrophons über einen separaten Eingangsverstärker in eine Frequenzweiche oder in einen Equalizer einzuspeisen. Denkbar ist es weiterhin, dass das Ausgangssignal des Controllers über einen weiteren Verstärker an die oder den Bass-Shaker weitergegeben wird. Wie oben ausgeführt, besteht in dem hier dargestellten Ausführungsbeispiel der Aufgabe der Bass-Shaker bzw. Aktuatoren 30 darin, die Schallerzeugung an der Quelle selbst sowie auch an angekoppelten Bauteilen mittels aktiver Gegenkopplung zu kompensieren.

## Patentansprüche

1. Umkehrosmoseanlage (100) mit einer Vorrichtung zur Geräuschminderung der Umkehrosmoseanlage (100), **dadurch gekennzeichnet, dass** die Vorrichtung wenigstens einen Sensor (10) zur Erfassung wenigstens eines von der Umkehrosmoseanlage (100) abgegebenen Geräusches, wenigstens einen mit dem Sensor (10) in Verbindung stehenden Controller (20) zur Auswertung des oder der von dem Sensor (10) erhaltenen Signale sowie wenigstens einen mit dem Controller (20) in Verbindung stehenden Aktuator (30) aufweist, wobei der Aktuator (30) derart ausgebildet ist, dass er ein akustisches Signal oder eine Vibration erzeugt, mittels dessen/derer das von der Umkehrosmoseanlage (100) abgegebene Geräusch gedämpft oder ausgelöscht wird.

2. Umkehrosmoseanlage (100) nach Anspruch 1, **dadurch gekennzeichnet, dass** der Aktuator (30) als Lautsprecher ausgeführt ist.

3. Umkehrosmoseanlage (100) nach Anspruch 1 oder 2, **dadurch gekennzeichnet, dass** der Aktuator (30) als Vibrationsquelle ausgeführt ist.

4. Umkehrosmoseanlage (100) nach einem der vorhergehenden Ansprüche, **dadurch gekennzeichnet, dass** die Umkehrosmoseanlage (100) eine Gehäusewandung (40) aufweist und dass der wenigstens eine Aktuator (30) an der Außenseite und/oder an der Innenseite der Gehäusewandung (40) angeordnet ist.

5. Umkehrosmoseanlage nach Anspruch 4, **dadurch gekennzeichnet, dass** der wenigstens eine Aktuator (30) unmittelbar an der Gehäusewandung (40) anliegt.

6. Umkehrosmoseanlage (100) nach Anspruch 4 oder 5, **dadurch gekennzeichnet, dass** Sensoren (10) und/oder Aktuatoren (30) an mehreren Stellen der Gehäusewandung (40) der Umkehrosmoseanlage (100) angeordnet sind.

7. Umkehrosmoseanlage (100) nach einem der vorhergehenden Ansprüche, **dadurch gekennzeichnet, dass** die Umkehrosmoseanlage (100) eine Tragstruktur aufweist und dass der wenigstens eine Aktuator (30) an der Tragstruktur angeordnet ist.

8. Umkehrosmoseanlage (100) nach einem der vorhergehenden Ansprüche, **dadurch gekennzeichnet, dass** der wenigstens eine Aktuator (30) mittelbar oder unmittelbar an oder in einem der Bauteile der Umkehrosmoseanlage (100) angeordnet ist oder mittels eines Tragelementes an oder in der Umkehrosmoseanlage (100) angeordnet ist.

9. Dialysemaschine, **dadurch gekennzeichnet, dass** die Dialysemaschine eine Umkehrosmoseanlage gemäß einem der Ansprüche 1 bis 8 aufweist.

10. Dialysemaschine nach Anspruch 9, **dadurch gekennzeichnet, dass** der Controller (20) der Vorrichtung zur Geräuschminderung Bestandteil einer Rechen- oder Steuereinheit der Dialysemaschine ist.

11. Verfahren zur Geräuschminderung einer Umkehrosmoseanlage (100), **dadurch gekennzeichnet, dass** wenigstens ein von der Umkehrosmoseanlage (100) abgegebenes Geräusch erfaßt wird, dass das erfaßte Geräusch ausgewertet wird und dass in Abhängigkeit der erfolgten Auswertung ein akustisches Signal oder eine Vibration erzeugt wird, mittels dessen/derer das von der Umkehrosmoseanlage (100) abgegebene Geräusch gedämpft oder ausgelöscht wird.

12. Verfahren nach Anspruch 11, **dadurch gekennzeichnet, dass** an mehreren Position der Umkehrosmoseanlage (100) Geräusche der Umkehrosmoseanlage (100) erfaßt werden und/oder dass an mehreren Positionen der Umkehrosmoseanlage (100) akustische Signale und/oder Vibrationen erzeugt werden, mittels derer das von der Umkehrosmoseanlage (100) abgegebene Geräusch gedämpft oder ausgelöscht wird.

13. Verfahren nach Anspruch 11 oder 12, **dadurch gekennzeichnet, dass** die Auswertung des erfaßten Geräusches durch eine Rechen- oder Steuereinheit einer Dialysemaschine vorgenommen oder unterstützt wird.

## Claims

1. A reverse osmosis system (100) having an apparatus for noise cancellation of the reverse osmosis system (100), **characterized in that** the apparatus has at least one sensor (10) for the detection of at least one noise emitted by the reverse osmosis system (100), at least one controller (20) connected to the sensor (10) for the evaluation of the signal or signals obtained from the sensor (10), as well as at least one actuator (30) connected to the controller (20), wherein the actuator (30) is configured such that it generates an acoustic signal or a vibration by means of which the noise emitted by the reverse osmosis system (100) is damped or cancelled out.

2. A reverse osmosis system (100) in accordance with claim 1, **characterized in that** the actuator (30) is formed as a loudspeaker.

3. A reverse osmosis system (100) in accordance with claim 1 or 2, **characterized in that** the actuator (30) is formed as a vibration source.

4. A reverse osmosis system (100) in accordance with one of the preceding claims, **characterized in that** the reverse osmosis system (100) comprises a housing wall (40) and **in that** the at least one actuator (30) is arranged at the outer side and/or at the inner side of the housing wall (40).

5. A reverse osmosis system in accordance with claim 4, **characterized in that** the at least one actuator (30) directly abuts the housing wall (40).

6. A reverse osmosis system (100) in accordance with claim 4 or 5, **characterized in that** sensors (10) and/or actuators (30) are arranged at multiple positions of the housing wall (40) of the reverse osmosis system (100).

7. A reverse osmosis system (100) in accordance with one of the preceding claims, **characterized in that** the reverse osmosis system (100) comprises a support structure, and **in that** the at least one actuator (30) is arranged at the support structure.

8. A reverse osmosis system (100) in accordance with one of the preceding claims, **characterized in that** the at least one actuator (30) is arranged indirectly or directly at or in one of the components of the reverse osmosis system (100) or is arranged at or in the reverse osmosis system (100) by means of a support element.

9. A dialysis machine, **characterized in that** the dialysis machine comprises a reverse osmosis system in accordance with one of claims 1 to 8.

10. A dialysis machine in accordance with claim 9, **characterized in that** the controller (20) of the apparatus for noise cancellation is an integral component of a processing unit or control unit of the dialysis machine.

11. A method for noise cancellation of a reverse osmosis system (100), **characterized in that** at least one noise emitted by the reverse osmosis system (100) is detected, **in that** the detected noise is evaluated, and **in that** an acoustic signal or a vibration is generated in dependence on the evaluation made, by means of which signal or vibration the noise emitted by the reverse osmosis system (100) is damped or cancelled out.

12. A method in accordance with claim 11, **characterized in that** noises of the reverse osmosis system (100) are detected at multiple positions of the reverse osmosis system (100), and/or **in that** acoustic signals and/or vibrations are generated at multiple positions of the reverse osmosis system (100), by means of which signals or vibrations the noise emitted by the reverse osmosis system (100) is damped or cancelled out.

13. A method in accordance with claim 11 or 12, **characterized in that** the evaluation of the detected noise is carried out or supported by a processing unit or control unit of a dialysis machine.

## Revendications

1. Installation d'osmose inverse (100) comprenant un dispositif d'atténuation de bruit de l'installation d'osmose inverse (100), **caractérisé en ce que** le dispositif présente au moins un capteur (10) destiné à capter au moins un bruits émis par l'installation d'osmose inverse (100), au moins un contrôleur (20) en communication avec le capteur (10), destiné à évaluer le signal ou les signaux reçu(s) par le capteur (10), ainsi qu'au moins un actionneur (30) en communication avec le contrôleur (20), l'actionneur (30) étant réalisé de manière à générer un signal acoustique ou une vibration, au moyen duquel/de laquelle le bruit émis par l'installation d'osmose inverse (100) est atténué ou supprimé.

2. Installation d'osmose inverse (100) selon la revendication 1, **caractérisée en ce que** l'actionneur (30) est réalisé comme haut-parleur.

3. Installation d'osmose inverse (100) selon la revendication 1 ou 2, **caractérisée en ce que** l'actionneur (30) est réalisé comme source de vibration.

4. Installation d'osmose inverse (100) selon l'une quelconque des revendications précédentes, **caractérisée en ce que** l'installation d'osmose inverse (100) présente une paroi de boîtier (40) et **en ce que** l'au moins un actionneur (30) est disposé sur le côté extérieur et/ou sur le côté intérieur de la paroi de boîtier (40).

5. Installation d'osmose inverse selon la revendication 4, **caractérisée en ce que** l'au moins un actionneur (30) est directement adjacent à la paroi de boîtier (40).

6. Installation d'osmose inverse (100) selon la revendication 4 ou 5, **caractérisée en ce que** des capteurs (10) et/ou des actionneurs (30) sont disposés à plusieurs endroits de la paroi de boîtier (40) de l'installation d'osmose inverse (100).

7. Installation d'osmose inverse (100) selon l'une quelconque des revendications précédentes, **caractérisée en ce que** l'installation d'osmose inverse (100) présente une structure porteuse et **en ce que** l'au moins un actionneur (30) est disposé sur la structure porteuse.

8. Installation d'osmose inverse (100) selon l'une quelconque des revendications précédentes, **caractérisée en ce que** l'au moins un actionneur (30) est disposé indirectement ou directement sur ou dans un des composants de l'installation d'osmose inverse (100) ou est disposé sur ou dans l'installation d'osmose inverse (100) au moyen d'un élément de support.

9. Machine de dialyse, **caractérisée en ce que** la machine de dialyse présente une installation d'osmose inverse selon l'une quelconque des revendications 1 à 8.

10. Machine de dialyse selon la revendication 9, **caractérisée en ce que** le contrôleur (20) du dispositif d'atténuation de bruit fait partie d'une unité de calcul ou de commande de la machine de dialyse.

11. Procédé d'atténuation de bruit d'une installation d'osmose inverse (100), **caractérisé en ce qu'**au moins un bruit émis par l'installation d'osmose inverse (100) est détecté, **en ce que** le bruit détecté est évalué et **en ce qu'**en fonction de l'évaluation réalisée, un signal acoustique ou une vibration est généré(e) au moyen duquel/de laquelle le bruit émis par l'installation d'osmose inverse (100) est atténué ou supprimé.

12. Procédé selon la revendication 11, **caractérisé en ce que** des bruits de l'installation d'osmose inverse (100) sont détectés à plusieurs positions de l'installation d'osmose inverse (100) et/ou **en ce que** des signaux acoustique et/ou des vibrations sont généré(e)s à plusieurs positions de l'installation d'osmose inverse (100), au moyen desquels/desquelles le bruit émis par l'installation d'osmose inverse (100) est atténué ou supprimé.

13. Procédé selon la revendication 11 ou 12, **caractérisé en ce que** l'évaluation du bruit détecté est réalisée ou soutenue par une unité de calcul ou de commande d'une machine de dialyse.
